# EUROPÄISCHE PATENTSCHRIFT

(11) **EP 4 264 818 B1**
(45) Veröffentlichungstag und Bekanntmachung des Hinweises auf die Patenterteilung: **29.01.2025**
(21) Anmeldenummer: 21836109.5
(22) Anmeldetag: 10.12.2021
(51) Int. Cl.: H02P 5/00, H02P 29/68, H02P 29/60, H02P 27/08

(54) **STROMRICHTERANORDNUNG**
POWER CONVERTER ASSEMBLY
ENSEMBLE CONVERTISSEUR DE PUISSANCE

(30) Priorität: 15.02.2021 EP 21157020
(43) Veröffentlichungstag der Anmeldung: 25.10.2023
(73) Patentinhaber: Siemens Aktiengesellschaft, 80333 München (DE)
(72) Erfinder: KÜRTEN, Bernd, 90587 Obermichelbach (DE); NAMYSLO, Lutz, 91353 Hausen (DE); WEIS, Benno, 91334 Hemhofen (DE)
(74) Vertreter: Siemens Patent Attorneys
(86) Internationale Anmeldenummer: PCT/EP2021/085196
(87) Internationale Veröffentlichungsnummer: WO 2022/171332

(56) Entgegenhaltungen:
- DE-A1- 102014 008 642
- DE-B4- 102016 010 409
- US-A1- 2008 150 455
- US-A1- 2014 361 721
- US-A1- 2015 295 532
- US-A1- 2017 170 097

## Beschreibung

Die Erfindung betrifft eine Stromrichteranordnung umfassend eine erste Halbleiteranordnung ausgestaltet für die Versorgung einer ersten elektrischen Maschine mit einem ersten Strom, eine zweite Halbleiteranordnung ausgestaltet zur Versorgung einer zweiten elektrischen Maschine mit einem zweiten Strom, ein erstes Strommessmittel ausgestaltet zur Ermittlung des der ersten elektrischen Maschine zugeführten ersten Stroms, ein zweites Strommessmittel ausgestaltet zur Ermittlung des der zweiten Maschine zugeführten zweiten Stroms, eine Kontrolleinheit ausgestaltet mit einem ersten Ausgang zur Ausgabe einer ersten Regelgröße für die erste Halbleiteranordnung und einem zweiten Ausgang zur Ausgabe einer zweiten Regelgröße für die zweite Halbleiteranordnung, wobei die Kontrolleinheit ausgestaltet ist, die Regelgrößen bereitzustellen, weiterhin ausgestaltet mit einem ersten Eingang, welcher mit dem ersten Strommessmittel in Verbindung steht, einem zweiten Eingang, welcher mit dem zweiten Strommessmittel in Verbindung steht.

Wird eine Stromrichteranordnung, beispielsweise ein Frequenzumrichter ausgeführt zwei Motoren oder Achsen gleichzeitig zu steuern, so sind in der Regel verlusterzeugende Leistungsmodule, insbesondere Halbleiteranordnungen, in vielen Fällen thermisch in Reihe geschaltet. Für eine wirtschaftliche Ausführung, insbesondere für eine Lagerhaltung, sind die Halbleitermodule für den ersten anzutreibenden Motor und den zweiten anzutreibenden Motor häufig identisch ausgeführt, wodurch im Gerät bezogen auf eine optimierte Fertigung eine hohe Gleichheit erreicht wird.

Werden aber beide Motoren später in einen realen Betrieb mit ihrem Bemessungsstrom betrieben, so besteht die Gefahr, dass die Halbleiteranordnung, beispielsweise für den zweiten Motor überhitzt wird, weil ein Kühlkörper unter den beiden Halbleiteranordnungen aufgrund der hintereinander angeordneten Halbleitermodule, welche in diesem Fall thermisch in Reihe geschaltet sind, bereits durch die erste Halbleiteranordnung für die erste elektrische Maschine vorgeheizt ist.

Aus der Praxis ist es bekannt und möglich, zur Kühlung von Halbleiter-Bauelementen, Kühlkörper einzusetzen.

Aus der EP 0 340 520 B1 ist eine Anordnung zur konvektiven Kühlung von Bauelementen bekannt, die einen Kühlkörper aufweist, der aus zwei übereinander angeordneten Teilen zusammengesetzt ist.

Die US 2008/150455 A1 offenbart eine Steuereinheit für zwei Elektromotoren, welche darauf ausgelegt ist, die Bestromung der Spulen zu koordinieren, damit nicht eine Stromkomponente durch die falsche Spule fließt.

Die US 2015/295532 A1 offenbart eine Steuerung für einen elektrischen Kompressor, wobei eine Drehzahl eines Motors vom Kompressionsmechanismus gesteuert wird.

Die US 2017/170097 A1 offenbart einen Kühlköprer einer Leistungseinheit auf dem ein erstes und ein zweites Leistungshalbleiterteil montiert sind.

DE 10 2016 010409 B4 offenbart eine Stromrichteranordnung ausgestaltet als ein Einschubmodul mit einer senkrechten Einbaulage. Die zwei Halbleiteranordnungen sind gemeinsam auf einem Kühlkörper angeordnet, wobei eine Längsachse des Kühlkörpers vertikal angeordnet ist und damit eine Strömungsrichtung für ein Kühlmedium durch das Einschubmodul parallel zur Längsachse entsteht.

Aus fertigungstechnischen Gründen und aufgrund eines einfacheren konstruktiven Aufbaus und/oder einer platzsparenden Anordnung, beispielsweise in Stromrichteranordnungen, insbesondere bei Frequenzumrichtern, werden die Halbleiteranordnungen, welche zur Ansteuerung eines Motors benötigt werden, oft auf einen gemeinsamen Kühlkörper zur Entwärmung angeordnet. Diese Halbleiteranordnungen sind in Bezug auf eine Richtung eines Kühlmedium-Flusses nacheinander platziert, wodurch eine thermische Reihenschaltung entsteht. Diese thermische Reihenschaltung führt zu einer abnehmenden Kühlwirkung, je weiter das jeweilige zu kühlende Halbleiter-Bauelement von einem Einlass des Kühlmediums entfernt ist.

Es ist Aufgabe der vorliegenden Erfindung eine Stromrichteranordnung bereitzustellen, bei welcher es nicht vorkommt, dass der Betrieb einer zweiten Halbleiteranordnung aufgrund einer erreichten Grenztemperatur zur Zerstörung führt.

Diese Aufgabe wird erfindungsgemäß durch eine Vorrichtung mit den in Patentanspruch 1 angegebenen Merkmalen gelöst.

Die Aufgabe wird für die eingangs genannte Stromrichteranordnung dadurch gelöst, dass die Kontrolleinheit ausgestaltet ist, aus dem ersten Strom und dem zweiten Strom kontinuierlich einen Summenstrom zu bilden und den Summenstrom mit einem vorgebbaren Maximalwert zu vergleichen, wobei die Kontrolleinheit ein Speichermittel aufweist, in dem ein Prioritätsrang von einem Anwender eingebbar ist, wobei der Prioritätsrang den Vorrang einer der beiden Maschinen beschreibt, weiterhin ist die Kontrolleinheit ausgestaltet, bei Überschreiten des Maximalwertes denjenigen Strom der jeweiligen Maschine zu reduzieren, welche gemäß dem Prioritätsrang nicht den Vorrang hat.

Zum einen ist es hier von Vorteil, dass beispielsweise über einen Kundenparameter, nämlich dem Prioritätsrang, vorgegeben werden, welche der beiden elektrischen Maschinen priorisiert werden soll, falls beispielsweise bei einer elektrischen Maschine ein höherer Summenstrom angefordert werden sollte. Dann kann eine andere elektrische Maschine mit einer niedrigeren Priorität, vielleicht braucht sie in dem Moment auch gar nicht bedient werden, zugunsten der anderen Maschine abgeschaltet oder deren Strom reduziert werden.

Dabei ist die Kontrolleinheit dazu ausgestaltet für die erste Maschine und für die zweite Maschine jeweils eine erste bzw. eine zweite Drehzahl und ein erstes bzw. ein zweites Drehmoment zu erfassen, weiterhin ausgestaltet aus der ersten Drehzahl und dem ersten Drehmoment eine erste Wirkleistung bzw. aus der zweiten Drehzahl und dem zweiten Drehmoment eine zweite Wirkleistung und aus den beiden Wirkleistungen eine Summenleistung zu ermitteln, aus der Summenleistung wird wiederum ein Zwischenkreis-Summenstrom ermittelt, welcher mit dem Maximalwert verglichen wird.

Im Hinblick auf eine Einbauweise in einer industriellen Anlage ist die Stromrichteranordnung mit besonderen Vorteil ausgestaltet als ein Einschubmodul mit einer senkrechten Einbaulage, wobei die erste Halbleiteranordnung und die zweite Halbleiteranordnung hintereinander gemeinsam auf einen Kühlkörper angeordnet sind, wobei eine Längsachse des Kühlkörpers vertikal angeordnet ist und damit eine Strömungsrichtung für ein Kühlmedium durch das Einschubmodul parallel zur Längsachse entsteht und ein Einlass für das Kühlmedium unten und ein Auslass für das Kühlmedium oben angeordnet ist.

In einer weiteren Ausgestaltung ist es vorteilhaft, wenn der Maximalwert derart gewählt ist, dass er kleiner ist als eine Summe aus einem ersten Bemessungsstrom der ersten Maschine und einem zweiten Bemessungsstrom der zweiten Maschine. Erfindungsgemäß sollte verhindert werden, dass ein gleichzeitiger Betrieb beider Maschinen mit ihrem Bemessungsstrom bei der Stromrichteranordnung bzw. seinem Kühlkörper eine Grenztemperatur erreicht, bei welcher ein Betrieb der zweiten Halbleiteranordnung nicht mehr zulässig ist oder zur Zerstörung führen würde.

Mit anderen Worten wird der Summenstrom der beiden elektrischen Maschinen auf einen Wert begrenzt, der kleiner ist als die Summe der spezifizierten Nennströme für die Maschinen. Hierzu wird der Summenstrom der beiden elektrischen Maschinen von der Kontrolleinheit erfasst oder berechnet und auf einen Maximalwert begrenzt, der kleiner ist als die Summe der beiden Bemessungsströme der beiden elektrischen Antriebe. Beispielsweise beträgt der Bemessungsstrom der beiden elektrischen Maschinen je 18 Ampere, so könnte der Summenstrom auch einen Wert von z.B. 30 Ampere begrenzt werden.

In einer weiteren Ausgestaltung ist es vorteilhaft, wenn die Kontrolleinheit ausgestaltet ist, bei Überschreiten des Maximalwertes eine Schaltfrequenz der jeweiligen Halbleiteranordnungen zu reduzieren, welche gemäß den Prioritätsrang nicht den Vorrang hat.

In dieser Ausführungsform kann zusätzlich zur Strombegrenzung die Schaltfrequenz einer der beiden Halbleiteranordnungen reduziert werden. Dies entspricht einer kleineren Wirkleistung und dementsprechend einer kleineren Verlustleistung, welche in Wärme umgesetzt wird.

Ein für die Einspeisung relevanter Strom am Zwischenkreis ergibt sich aus den Einzelbelastungen der angeschlossenen elektrischen Maschinen. Für jede elektrische Maschine kann aus deren Drehzahl und deren Drehmomentverlauf die benötigte Wirkleistung als Funktion der Zeit ermittelt werden. Die Wirkleistung ergibt sich zu P = M·ω + P-Verluste. Die Summe der Wirkleistungen aller elektrischen Maschinen ergibt den Leistungsverlauf, der im Zwischenkreis tatsächlich anfällt.

Des Weiteren ist es von Vorteil, wenn die Kontrolleinheit als eine überlagerte Steuerung ausgestaltet ist.

Die Zeichnung zeigt ein Ausführungsbeispiel der Erfindung, dabei zeigt
- FIG 1: eine Stromrichteranordnung in einem Schaltschrank,
- FIG 2: den schematischen Aufbau einer Stromrichteranordnung mit einer Kontrolleinheit und
- FIG 3: die Kontrolleinheit mit zusätzlichen Eingangsgrößen.

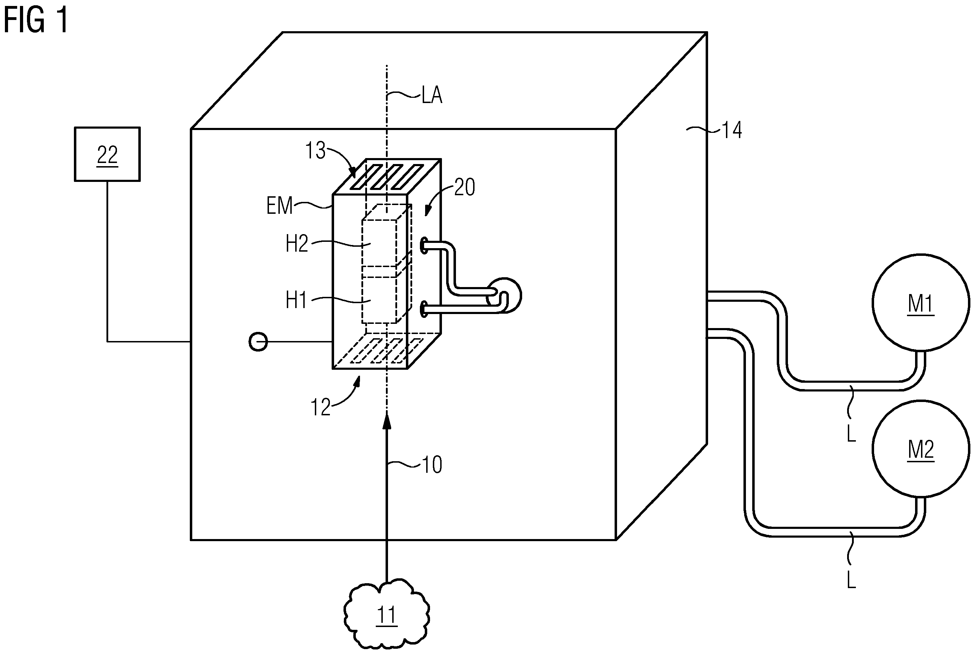

Gemäß FIG 1 ist ein Schaltschrank 14 dargestellt, in welchem eine Stromrichteranordnung 20 als ein Einschubmodul EM eingesteckt ist. Die Stromrichteranordnung 20 wird durch eine überlagerte Steuerung 22 gesteuert. An die Stromrichteranordnung 20 ist eine erste Maschine M1 und eine zweite Maschine M2 angeschlossen. Die Stromrichteranordnung 20 versorgt die erste Maschine M1 mit einem ersten Strom I1ᵢₛₜ und die zweite Maschine M2 mit einem zweiten Strom I2ᵢₛₜ.

Zur Kühlung einer ersten Halbleiteranordnung H1 und einer zweiten Halbleiteranordnung H2 innerhalb des elektrischen Moduls EM bzw. der Stromrichteranordnung 20, weist das elektrische Modul EM einen Einlass 12 auf. In den Einlass 12 kann aufgrund von Konvektion ein Kühlmedium 11 in Strömungsrichtung 10 einströmen und die erste Halbleiteranordnung H1 und die zweite Halbleiteranordnung H2 kühlen und aus einem Auslass 13 wieder austreten. Da die erste Halbleiteranordnung H1 und die zweite Halbleiteranordnung H2 hintereinandergeschaltet sind, kann die zweite Halbleiteranordnung H2 nicht so gekühlt werden wie die erste Halbleiteranordnung H1, weil sich das Kühlmedium 11 bereits aufgeheizt hat. Darüber hinaus sitzen die erste Halbleiteranordnung H1 und die zweite Halbleiteranordnung H1 in der Regel auf einen gemeinsamen Kühlkörper KK.

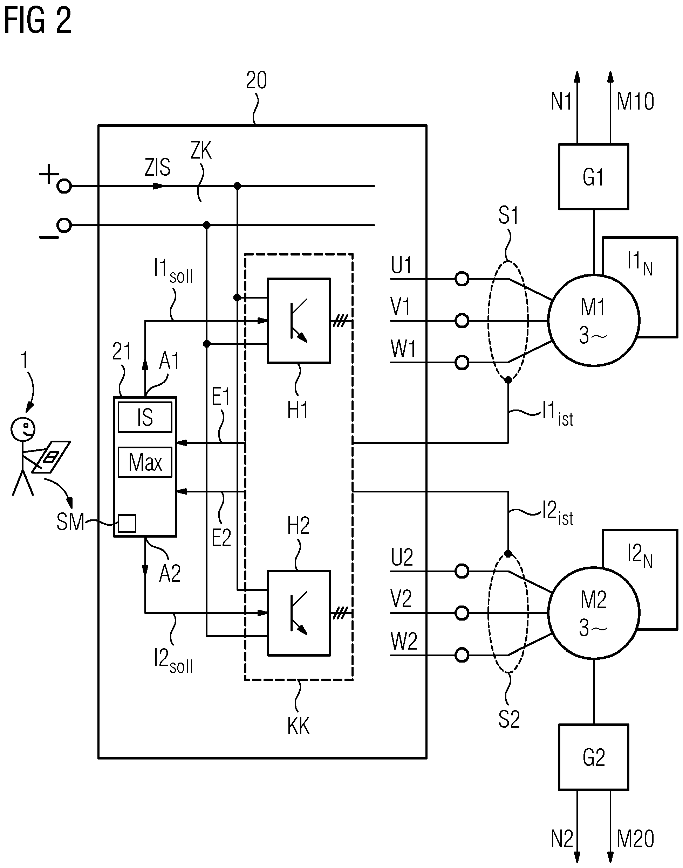

Um nun zu vermeiden, dass aufgrund einer thermischen Überlastung, beispielsweise die zweite Halbleiteranordnung H2 nicht mehr betrieben werden darf oder sogar zerstört wird, wird gemäß FIG 2 die Stromrichteranordnung 20 mit einer Kontrolleinheit 21 näher beschrieben.

Mit der FIG 2 ist die Stromrichteranordnung 20 dargestellt, umfasst so die erste Halbleiteranordnung H1, welche ausgestaltet ist zur Versorgung der ersten elektrischen Maschine M1 mit dem ersten Strom I1ᵢₛₜ und die zweite Halbleiteranordnung H2, welche ausgestaltet ist für die Versorgung der zweiten elektrischen Maschine M2 mit dem zweiten Strom I2ᵢₛₜ. Die Stromrichteranordnung 20 umfasst weiterhin ein erstes Strommessmittel S1 ausgestaltet zur Ermittlung des der ersten elektrischen Maschine M1 zugeführten ersten Stroms I1ᵢₛₜ und ein zweites Strommessmittel S2 ausgestaltet zur Ermittlung des der zweiten elektrischen Maschine M2 zugeführten zweiten Stroms I2ᵢₛₜ. Die Kontrolleinheit 21 ist dabei dazu ausgestaltet mit einem ersten Ausgang A1 zur Ausgabe einer ersten Regelgröße I1ₛₒₗₗ für die erste Halbleiteranordnung H1 die entsprechenden Regelgrößen zur Steuerung des Stromes für die erste elektrische Maschine M1 auszugeben. Weiterhin ist die Kontrolleinheit mit einem zweiten Ausgang A2 zur Ausgabe einer zweiten Regelgröße I2ₛₒₗₗ für die zweite Halbleiteranordnung H2 ausgestaltet. Die Kontrolleinheit 21 weist einen ersten Eingang E1 auf, welcher mit dem ersten Strommittel S1 in Verbindung steht. Ein zweiter Eingang E2 der Kontrolleinheit 21 steht mit dem zweiten Strommessmittel S2 in Verbindung.

Die Kontrolleinheit 21 ist ausgestaltet aus dem ersten Strom I1ᵢₛₜ und dem zweiten Strom I2ᵢₛₜ kontinuierlich einen Summenstrom IS zu bilden und den Summenstrom IS mit einem vorgebbaren Maximalwert Max zu vergleichen. Die Kontrolleinheit 21 weist ein Speichermittel SM auf, und dieses Speichermittel SM kann über einen Anwender 1 mit einem Prioritätsrang PR über ein Steuergerät parametriert werden. Der Prioritätsrang PR beschreibt den Vorrang einer der beiden Maschinen M1,M2, welche im Falle einer Überlast auf jeden Fall noch mit ihrem Strom versorgt werden soll. Dazu ist die Kontrolleinheit 21 dazu ausgestaltet bei Überscheiten des Maximalwertes Max, also der Summenstrom IS ist größer als der Maximalwert Max, denjenigen Strom I1ᵢₛₜ,I2ᵢₛₜ der jeweiligen Maschine M1,M2 zu reduzieren, welcher gemäß dem Prioritätsrang PR nicht den Vorrang hat.

An die erste Halbleiteranordnung H1 ist schematisch die erste elektrische Maschine M1 als eine dreiphasige Maschine mit den Anschlüssen U1,V1,W1 angeschlossen. An die zweite Halbleiteranordnung H2 ist die zweite elektrische Maschine M2 als eine dreiphasige Maschine mit den Anschlüssen U2,V2,W2 angeschlossen.

Die erste Halbleiteranordnung H1 und die zweite Halbleiteranordnung H2 sind auf einen gemeinsamen Kühlkörper KK angeordnet. Damit je nach Einbaulage nicht die eine Halbleiteranordnung H1,H2 oder die andere Halbleiteranordnung H1,H2 überhitzt, ist die Stromrichteranordnung 20 mit der Kontrolleinheit 21 zur Abschaltung des jeweils nicht priorisierten Stromes vorgesehen.

Für eine weiter verbesserte Ermittlung eines Summenstromes IS bzw. eines Zwischenkreis-Summenstromes ZIS ist an die erste elektrische Maschine M1 ein erster Geber G1 und an die zweite elektrische Maschine M2 ein zweiter Geber G2 angeschlossen. Über die beiden Geber G1 und G2 kann die erste elektrische Maschine M1 eine erste Drehzahl N1 und ein erstes Drehmoment M10 bzw. die zweite elektrische Maschine M2 eine zweite Drehzahl N2 und ein zweites Drehmoment M20 an die Kontrolleinheit 21 übermitteln.

Die erste elektrische Maschine M1 und die zweite elektrische Maschine M2 sollen in der Regel mit ihren jeweiligen Nennströmen I1_{N} bzw. I2_{N} und ihren Nennleistungen P1_{N} und P2_{N} betrieben werden.

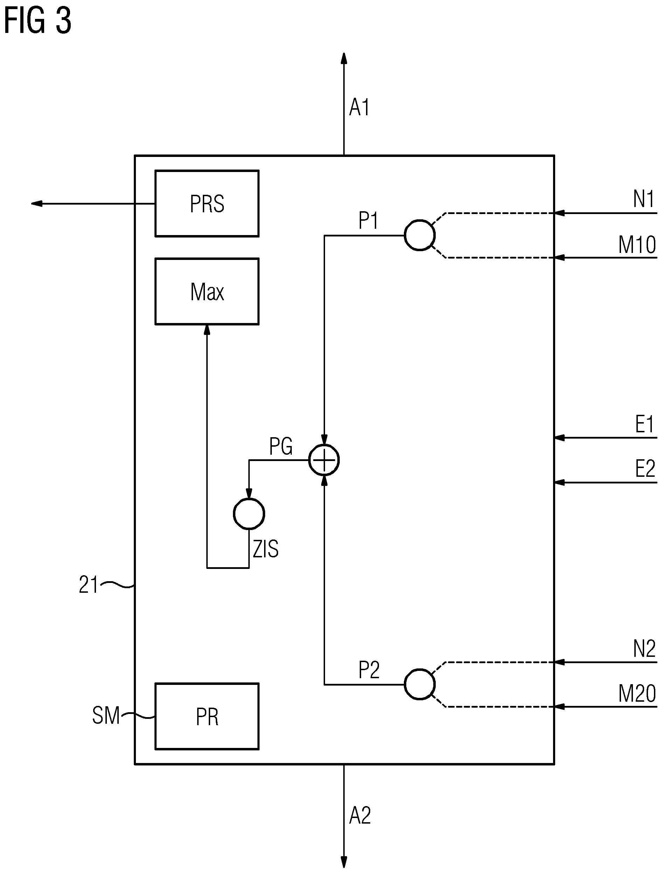

Mit FIG 3 wird das zuvor beschriebene erweiterte Verhalten der Kontrolleinheit 21 hinsichtlich Drehzahlerfassung und Drehmomenterfassung beschrieben. Zur Ermittlung eines Zwischenkreis-Summenstromes ZIS ist die Kontrolleinheit 21 weiterhin ausgestaltet für die erste elektrische Maschine M1 und die zweite elektrische Maschine M2 jeweils eine erste bzw. eine zweite Drehzahl N1,N2 und ein erstes bzw. ein zweites Drehmoment M10,M20 zu erfassen, weiterhin ausgestaltet aus der ersten Drehzahl N1 und dem ersten Drehmoment M1 eine erste Wirkleistung P1 zu errechnen. Eine zweite Wirkleistung P2 wird aus der zweiten Drehzahl N2 und dem zweiten Drehmoment M20 errechnet. Aus den beiden Wirkleistungen P1,P2 wird eine Summenleistung PG ermittelt.

Diese Summenleistung PG lässt wiederum den Rückschluss auf ein Zwischenkreis-Summenstrom ZIS zu, und dieser Zwischenkreis-Summenstrom ZIS darf ein Maximalwert Max nicht überschreiten. Dazu wird der Zwischenkreis-Summenstrom ZIS mit dem Maximalwert Max verglichen. Im Fall einer Überschreitung wird über ein Prioritätsschaltmittel PRS derjenige Strom für diejenige Maschine M1,M2 reduziert, welche gemäß den Prioritätsrang PR nicht den Vorrang hat.

Als besonderer Vorteil wird angesehen, dass der Prioritätsrang PR als ein Kundenparameter vorgegeben werden kann, danach kann ein Kunde bzw. ein Anwender 1 seinen Prioritätsrang PR je nach Applikation parametrieren. Dieser Parameter kann sogar im Betrieb der Stromrichteranordnung 20 verändert werden und ermöglicht damit eine Anpassung der jeweiligen Anlage an Veränderungen einer Applikation.

## Patentansprüche

1. Stromrichteranordnung (20),
umfassend eine erste Halbleiteranordnung (H1) ausgestaltet zur Versorgung einer ersten elektrischen Maschine (M1) mit einem ersten Strom (I1ᵢₛₜ),
eine zweite Halbleiteranordnung (H2) ausgestaltet zur Versorgung einer zweiten elektrischen Maschine (M2) mit einem zweiten Strom (I2ᵢₛₜ),
weiterhin umfassend
ein erstes Strommessmittel (S1) ausgestaltet zur Ermittlung des der ersten elektrischen Maschine (M1) zugeführten ersten Stroms (I1ᵢₛₜ),
ein zweites Strommessmittel (S2) ausgestaltet zur Ermittlung des der zweiten elektrischen Maschine (M2) zugeführten zweiten Stroms (I2ᵢₛₜ),
eine Kontrolleinheit (21) ausgestaltet mit
einem ersten Ausgang (A1) zur Ausgabe einer ersten Regelgröße (I1ₛₒₗₗ) für die erste Halbleiteranordnung (H1) und
einem zweiten Ausgang (A2) zur Ausgabe einer zweiten Regelgröße (I2ₛₒₗₗ) für die zweite Halbleiteranordnung (H2), wobei die Kontrolleinheit (21) ausgestaltet ist die Regelgrößen (I1ₛₒₗₗ,I2ₛₒₗₗ) bereitzustellen, weiterhin ausgestaltet mit einem ersten Eingang (E1), welcher mit dem ersten Strommessmittel (S1) in Verbindung steht,
einem zweiten Eingang (E2), welcher mit dem zweiten Strommessmittel (S2) in Verbindung steht, wobei die Kontrolleinheit (21) ein Speichermittel (SM) aufweist, in dem ein Prioritätsrang (PR) von einem Anwender (1) eingebbar ist, wobei der Prioritätsrang (PR) den Vorrang einer der beiden Maschinen (M1,M2) beschreibt, weiterhin ist die Kontrolleinheit (21) ausgestaltet bei Überschreiten eines vorgebbaren Maximalwertes (Max), denjenigen Strom (I1ist, I2ist) der jeweiligen Maschine (M1,M2) zu reduzieren, welche gemäß dem Prioritätsrang (PR) nicht den Vorrang hat,
**dadurch gekennzeichnet, dass** die Stromrichteranordnung(20) als ein Einschubmodul (EM) mit einer senkrechten Einbaulage ausgestaltet ist; wobei die erste Halbleiteranordnung (H1) und die zweite Halbleiteranordnung (H2) hintereinander gemeinsam auf einem Kühlkörper (KK) angeordnet sind, wobei eine Längsachse (LA) des Kühlkörpers (KK) vertikal angeordnet ist und damit eine Strömungsrichtung (10) für ein Kühlmedium (11) durch das Einschubmodul (EM) parallel zur Längsachse (LA) entsteht und ein Einlass (12) für das Kühlmedium (11) unten und ein Auslass (13) für das Kühlmedium (11) oben angeordnet ist; dass die Kontrolleinheit (21) ausgestaltet ist aus dem ersten Strom (I1ᵢₛₜ) und dem zweiten Strom (I2ᵢₛₜ) kontinuierlich einen Summenstrom (IS) zu bilden und den Summenstrom (IS) mit dem vorgebbaren Maximalwert (Max) zu vergleichen,
wobei die Kontrolleinheit (21) weiterhin ausgestaltet ist, für die erste Maschine (M1) und für die zweite Maschine (M2) jeweils eine erste bzw. eine zweite Drehzahl (N1,N2) und ein erstes bzw. ein zweites Drehmoment (M10, M20) zu erfassen, weiterhin ausgestaltet aus der ersten Drehzahl (N1) und dem ersten Drehmoment (M10)
eine erste Wirkleistung (P1) bzw. aus der zweiten Drehzahl (N2) und dem zweiten Drehmoment (M20) eine zweite Wirkleistung (P2) und aus den beiden Wirkleistungen (P1,P2) eine Summenleistung (PG) zu ermitteln, aus der Summenleistung (PG) wird wiederum ein Zwischenkreis-Summenstrom (ZIS) ermittelt, welcher mit dem Maximalwert (Max) verglichen wird, wobei im Fall einer Überschreitung über ein Prioritätsschaltmittel (PRS) derjenige Strom für diejenige Maschine reduziert wird, welche gemäß dem Prioritätsrang (PR) nicht den Vorrang hat, damit es nicht vorkommt, das der Betrieb der zweiten Halbleiteranordnung (H2) aufgrund einer erreichten Grenztemperatur zur Zerstörung führt.

2. Stromrichteranordnung (20) nach Anspruch 1, wobei der Maximalwert (Max) derart gewählt ist, dass er kleiner ist als eine Summe aus einem ersten Bemessungsstrom (I1_{N}) der ersten Maschine (M1) und einem zweiten Bemessungsstrom (I2_{N}) der zweiten Maschine (Max).

3. Stromrichteranordnung (20) nach Anspruch 1 oder 2, wobei die Kontrolleinheit (21) weiterhin ausgestaltet ist bei Überschreiten des Maximalwertes (Max) eine Schaltfrequenz (f_{T1},f_{T2}) der jeweiligen Halbleiteranordnung (H1,H2) zu reduzieren, welche gemäß dem Prioritätsrang (PR) nicht den Vorrang hat.

4. Stromrichteranordnung (20) nach einem der Ansprüche 1 bis 3, wobei die Kontrolleinheit (21) als eine überlagerte Steuerung (22) ausgestaltet ist.

## Claims

1. Power converter arrangement (20) comprising a first semiconductor arrangement (H1) that is designed so as to supply a first electric machine (M1) with a first current (I1_{actual}),
a second semiconductor arrangement (H2) that is designed so as to supply a second electric machine (M2) with a second current (I2_{actual}), furthermore comprising
a first current measuring means (S1) that is designed so as to determine the first current (I1_{actual}) that is supplied to the first electric machine (M1),
a second current measuring means (S2) that is designed so as to determine the second current (I2_{actual}) that is supplied to the second electric machine (M2),
a control unit (21) designed with
a first output (A1) for outputting a first control variable (I1ₛₑₜₚₒᵢₙₜ) for the first semiconductor arrangement (H1) and a second output (A2) for outputting a second control variable (I2ₛₑₜₚₒᵢₙₜ) for the second semiconductor arrangement (H2), wherein the control unit (21) is designed so as to provide the control variables (I1ₛₑₜₚₒᵢₙt, I2ₛₑₜₚₒᵢₙₜ), furthermore designed with
a first input (E1) that is connected to the first current measuring means (S1),
a second input (E2) that is connected to the second current measuring means (S2), wherein the control unit (21) has a storage means (SM) in which a priority rank (PR) can be input by a user (1), wherein the priority rank (PR) describes the priority of one of the two machines (M1, M2), furthermore the control unit (21) is designed in the event of exceeding the maximum value (Max) to reduce the current (I1_{actual}, I2_{actual}) of the respective machine (M1, M2) that does not have priority in accordance with the priority rank (P),
**characterised in that**
the power conductor arrangement (20) is designed as a plug-in module (EM) having a perpendicular installation position; wherein the first semiconductor arrangement (H1) and the second semiconductor arrangement (H2) are arranged one behind the other together on a heat sink (KK), wherein a longitudinal axis (LA) of the heat sink (KK) is arranged vertically and thus a flow direction (10) for a cooling medium (11) is formed by the plug-in module (EM) parallel to the longitudinal axis (LA) and an inlet (12) for the cooling medium (11) is arranged on the bottom and an outlet (13) for the cooling medium (11) is arranged on top; that the control unit (21) is designed so as to continuously form a sum current (IS) from the first current (I1_{actual}) and the second current (I2_{actual}) and so as to compare the sum current (IS) with the maximum value (Max), which can be predetermined,
wherein the control unit (21) is furthermore designed so as to acquire a first or a second rotational speed (N1, N2) and a first or a second torque (M10, M20) respectively for the first electric machine (M1) and for the second electric machine (M2), furthermore the control unit is designed so as to calculate from the first rotational speed (N1) and the first torque (M10) a first active power (P1) or from the second rotational speed (N2) and the second torque (M20) a second active power (P2) and from the two active powers (P1, P2) to determine a sum power (PG), from the sum power (PG) in turn an intermediate circuit sum current (ZIS) is determined, which is compared with the maximum value (Max), wherein in the event of exceeding the maximum value, the current for the machine, which does not have priority in accordance with the priority rank (PR), is reduced via a priority switching means (PRS) so that the operation of the second semiconductor arrangement (H2) does not lead to destruction on account of reaching a limit temperature.

2. Power converter arrangement (20) according to claim 1, wherein the maximum value (Max) is selected in such a manner that it is smaller than a sum of a first rated current (I1_{N}) of the first machine (M1) and a second rated current (I2_{N}) of the second machine (Max).

3. Power converter arrangement (20) according to claim 1 or 2, wherein the control unit (21) is furthermore designed in the event of exceeding the maximum value (Max) to reduce a switching frequency (f_{T1}, f_{T2}) of the respective semiconductor arrangement (H1, H2) that does not have priority in accordance with the priority rank (PR).

4. Power converter arrangement (20) according to one of claims 1 to 3, wherein the control unit (21) is designed as a superordinate controller (22).

## Revendications

1. Agencement (20) de convertisseur de puissance,
comprenant
un premier agencement (H1) à semiconducteur conformé pour l'alimentation d'une première machine (M1) électrique en un premier courant (I1ᵢₛₜ),
un deuxième agencement (H2) à semiconducteur conformé pour l'alimentation d'une deuxième machine (M2) électrique en un deuxième courant (I2ᵢₛₜ),
comprenant en outre
un premier moyen (S1) de mesure du courant conformé pour la détermination du premier courant (I1ᵢₛₜ) amené à la première machine (M1) électrique,
un deuxième moyen (S2) de mesure du courant conformé pour la détermination du deuxième courant (I2ᵢₛₜ) amené à la deuxième machine (M2) électrique,
une unité (21) de contrôle conformée en ayant
une première sortie (A1) pour donner une première grandeur (I1ₛₒₗₗ) de réglage pour le premier agencement (H1) à semiconducteur et
une deuxième sortie (A2) pour donner une deuxième grandeur (I2ₛₒₗₗ) de réglage pour le deuxième agencement (H2) à semiconducteur, dans lequel l'unité (21) de contrôle est conformée pour disposer des grandeurs (I1ₛₒₗₗ, I2ₛₒₗₗ) de réglage en étant conformé en outre en ayant
une première entrée (E1), qui est en liaison avec le premier moyen (S1) de mesure du courant,
une deuxième entrée (E2), qui est en liaison avec le deuxième moyen (S2) de mesure du courant, dans lequel l'unité (21) de contrôle a un moyen (SM) de mémoire, dans lequel un rang (PR) de priorité peut être donné par un utilisateur (1), dans lequel le rang (PR) de priorité décrit la priorité donnée à l'une des deux machines (M1, M2), l'unité (21) de contrôle étant conformée en outre pour, si une valeur (Max) maximum pouvant être donnée à l'avance est dépassée, réduire le courant (I1ᵢₛₜ, I2ᵢₛₜ) de la machine (M1, M2) respective, qui, suivant le rang (PR) de priorité, n'a pas la priorité,
**caractérisé en ce que**
l'agencement (20) de convertisseur de puissance est conformé sous la forme d'un modèle (EM) à tiroir ayant une position de montage vertical ; dans lequel le premier agencement (H1) à semiconducteur et le deuxième agencement (H2) à semiconducteur sont disposés conjointement l'un derrière l'autre sur un puits (KK) de chaleur, dans lequel un axe (LA) longitudinal du puits (KK) de chaleur est disposé verticalement et ainsi une direction (10) d'écoulement d'un milieu (11) de refroidissement dans le modèle (EM) à tiroir se créé parallèlement à l'axe (LA) longitudinal et une entrée (12) pour le milieu (11) de refroidissement est disposée en bas et une sortie (13) pour le fluide (11) de refroidissement en haut ; **en ce que** l'unité (21) de contrôle est conformée, pour former à partir du premier courant (I1ᵢₛₜ) et du deuxième courant (I2ᵢₛₜ) en continu un courant (IS) somme et pour comparer le courant (IS) somme à la valeur (Max) maximum pouvant être donnée à l'avance,
dans lequel l'unité (21) de contrôle est conformée en outre pour détecter, pour la première machine (M1) et pour la deuxième machine (M2), respectivement une première et une deuxième vitesses (N1, N2) de rotation et un premier et un deuxième couples (M10, M20), étant conformée en outre pour déterminer, à partir de la première vitesse (N1) de rotation et du premier couple (M10) une première puissance (P1) active et à partir de la deuxième vitesse (N2) de rotation et du deuxième couple (M20), une deuxième puissance (P2) active et à partir de deux puissances (P1, P2) actives, une puissance (PG) somme pour déterminer à partir de la puissance (PG) somme à nouveau un courant (ZIS) somme de circuit intermédiaire, que l'on compare à la valeur (Max) maximum, dans lequel, dans le cas d'un dépassement, on réduit par un moyen (PRS) de commutation de priorité le courant pour la machine, qui, suivant le rang (PR) de priorité, n'a pas la priorité, de manière à ce qu'il n'arrive pas que le fonctionnement du deuxième agencement (H2) à semiconducteur entraîne la destruction en raison de l'atteinte d'une température limite.

2. Agencement (20) de convertisseur de puissance suivant la revendication 1, dans lequel la valeur (Max) maximum est choisie, de manière à être plus petite que la somme d'un premier courant (I1_{N}) nominal de la première machine (M1) et d'un deuxième courant (I2_{N}) nominal de la deuxième machine (Max).

3. Agencement (20) de convertisseur de puissance suivant la revendication 1 ou 2, dans lequel l'unité (21) de contrôle est conformée en outre pour réduire, si la valeur (Max) maximum est dépassée, une fréquence (f_{T1}, f_{T2}) de commutation de l'agencement (H1, H2) à semiconducteur respectif, qui, suivant le rang (PR) de priorité, n'a pas la priorité.

4. Agencement (20) de convertisseur de puissance suivant l'une des revendications 1 à 3, dans lequel l'unité (21) de contrôle est conformée sous la forme d'une commande (22) superposée.
